# EUROPEAN PATENT APPLICATION

(11) **EP 3 940 555 A2**
(43) Date of publication of application: **19.01.2022**
(21) Application number: 21205491.0
(22) Date of filing: 29.10.2021
(51) Int. Cl.: G06F 16/901, G06F 16/9035, G06F 16/906

(54) **METHOD AND APPARATUS OF PROCESSING INFORMATION, METHOD AND APPARATUS OF RECOMMENDING INFORMATION, ELECTRONIC DEVICE, AND STORAGE MEDIUM**

(30) Priority: 05.03.2021 CN 202110246985
(71) Applicant: BEIJING BAIDU NETCOM SCIENCE TECHNOLOGY CO., LTD., No.10 Shangdi 10th Street Haidian District Beijing 100085 (CN)
(72) Inventor: CHENG, Mo, Beijing, 100085 (CN); YU, Dianhai, Beijing, 100085 (CN); MA, Lin, Beijing, 100085 (CN); WU, Zhihua, Beijing, 100085 (CN); DONG, Daxiang, Beijing, 100085 (CN); TANG, Wei, Beijing, 100085 (CN)
(74) Representative: Carpmaels & Ransford LLP

(57) **Abstract**

The present disclosure provides a method of processing information, an apparatus of processing information, a method of recommending information, an electronic device, and a storage medium. The method includes: obtaining a tree structure parameter of a tree structure, wherein the tree structure is configured to index an object set used for recommendation; obtaining a classifier parameter of a classifier, wherein the classifier is configured to sequentially predict, from a top layer of the tree structure to a bottom layer of the tree structure, a preference node set whose probability of being preferred by a user is ranked higher in each layer, and a preference node set of each layer subsequent to the top layer of the tree structure is determined based on a preference node set of a previous layer of the each layer; and constructing a recalling model based on the tree structure parameter and the classifier parameter. The recalling model constructed according to the embodiments of the present disclosure uses the tree structure parameter and the classifier parameter as model parameters, which optimizes the training process and use process of the recalling model, thereby improving the recalling result of the recalling model.

## Description

### TECHNICAL FIELD

The present disclosure relates to fields of computer technology and information processing technology, and in particular to fields of artificial intelligence technology, recommendation system technology, and deep learning technology.

### BACKGROUND

In an application scenario of a recommendation system based on deep learning, there are technical difficulties such as a large amount of data, many features, and low latency required for online recommendation. In order to cope with these technical difficulties, in practice, a recommendation process is usually divided into two major steps. First step is a recalling step, that is, calculating similarity between user features or related sentences input into a recommendation system and a large number (for example, hundreds of millions) of goods, advertisements, news and other objects (also called categories) information in a database. Through retrieval manners such as inverted index or vector cosine similarity calculation, a small number (for example, hundreds) of objects with high relevance are selected. Second step is a ranking step, that is, using hundreds of objects obtained by recalling (for example, multi-channel recalling) and the user features to further calculate business indicators such as click rate, payment rate, and estimated viewing time period, and based on the business indicators, ranking the recalled objects to generate a recommendation result that is finally presented to the user.

It can be seen that the basis for the good performance of the recommendation system is a high correlation between the object recalled in the recalling step and the user features or user data. Therefore, improving a recalling effect of the recalling step can significantly improve a subsequent ranking and presenting effect of the recommendation system.

### SUMMARY

The present disclosure provides a method of processing information, an apparatus of processing information, a method of recommending information, an apparatus of recommending information, an electronic device, a computer-readable storage medium, and a computer program product.

According to a first aspect of the present disclosure, a method of processing information is provided, and the method includes: obtaining a tree structure parameter of a tree structure, wherein the tree structure is configured to index an object set used for recommendation; obtaining a classifier parameter of a classifier, wherein the classifier is configured to sequentially predict, from a top layer of the tree structure to a bottom layer of the tree structure, a preference node set whose probability of being preferred by a user is ranked higher in each layer, and a preference node set of each layer subsequent to the top layer of the tree structure is determined based on a preference node set of a previous layer of the each layer; and constructing a recalling model based on the tree structure parameter and the classifier parameter to determine a candidate object set for the user in the object set.

According to a second aspect of the present disclosure, a method of recommending information is provided, and the method includes: determining a candidate object set for a user from an object set used for recommendation in a recommendation system based on a recalling model, wherein the recalling model is constructed according to the method of the first aspect; and determining, in the candidate object set, at least one object recommended to the user.

According to a third aspect of the present disclosure, an apparatus of processing information is provided, and the apparatus includes: a tree structure parameter obtaining module configured to obtain a tree structure parameter of a tree structure, wherein the tree structure is configured to index an object set used for recommendation; a classifier parameter obtaining module configured to obtain a classifier parameter of a classifier, wherein the classifier is configured to sequentially predict, from a top layer of the tree structure to a bottom layer of the tree structure, a preference node set whose probability of being preferred by a user is ranked higher in each layer, and a preference node set of each layer subsequent to the top layer of the tree structure is determined based on a preference node set of a previous layer of the each layer; and a recalling model constructing module configured to construct a recalling model based on the tree structure parameter and the classifier parameter to determine a candidate object set for the user in the object set.

According to a fourth aspect of the present disclosure, an apparatus of recommending information is provided, and the apparatus includes: a recalling module configured to determine a candidate object set for a user from an object set used for recommendation in a recommendation system based on a recalling model, wherein the recalling model is constructed according to the method of the first aspect; and a recommendation object determination module configured to determine, in the candidate object set, at least one object recommended to the user.

According to a fifth aspect of the present disclosure, an electronic device is provided, and the electronic device includes: one or more processor; and a memory communicatively connected to the processor, wherein the memory stores instructions executable by the processor, and the instructions, when executed by the processor, cause the processor to implement the method of the first aspect.

According to a sixth aspect of the present disclosure, an electronic device is provided, and the electronic device includes: one or more processor; and a memory communicatively connected to the processor, wherein the memory stores instructions executable by the processor, and the instructions, when executed by the processor, cause the processor to implement the method of the second aspect.

According to a seventh aspect of the present disclosure, a non-transitory computer-readable storage medium having a computer instruction stored thereon is provided, wherein the computer instruction is configured to cause a computer to implement the method of the first aspect.

According to an eighth aspect of the present disclosure, a non-transitory computer-readable storage medium having a computer instruction stored thereon is provided, wherein the computer instruction is configured to cause a computer to implement the method of the second aspect.

According to an ninth aspect of the present disclosure, a computer program product containing a computer program, wherein the computer program, when executed by a processor, causes the processor to implement the method of the first aspect.

According to a tenth aspect of the present disclosure, a computer program product containing a computer program, wherein the computer program, when executed by a processor, causes the processor to implement the method of the second aspect.

It should be understood that the content described in this section is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the present disclosure and do not constitute a limitation to the present disclosure, in which:
FIG. 1 shows a schematic diagram of an exemplary environment in which some embodiments of the present disclosure may be implemented;
FIG. 2 shows a flowchart of an exemplary process of a method of processing information according to the embodiments of the present disclosure;
FIG. 3 shows a flowchart of an exemplary process of determining a tree structure parameter based on an object set according to the embodiments of the present disclosure;
FIG. 4 shows an exemplary block diagram representation of determining a tree structure parameter based on an object set according to the embodiments of the present disclosure;
FIG. 5 shows a flowchart of an exemplary process of determining a positive sample for training a recalling model according to the embodiments of the present disclosure;
FIG. 6 shows a flowchart of an exemplary process of determining a positive sample based on an intersection of two node sets according to the embodiments of the present disclosure;
FIG. 7 shows a flowchart of an exemplary process of adding a new leaf node to a tree structure according to the embodiments of the present disclosure;
FIG. 8 shows a flowchart of an exemplary process of constructing a new recalling model after removing an object from the object set according to the embodiments of the present disclosure;
FIG. 9 shows a flowchart of an exemplary process of a method of recommending information according to the embodiments of the present disclosure;
FIG. 10 shows a block diagram of an exemplary process of an online recalling stage and an offline training stage in a case that the tree structure is separated from the recalling model;
FIG. 11 shows a block diagram of an exemplary process of an offline training stage and an online recalling stage of a recalling model according to the embodiments of the present disclosure;
FIG. 12 shows a block diagram of an exemplary apparatus of processing information according to the embodiments of the present disclosure;
FIG. 13 shows a block diagram of an exemplary apparatus of recommending information according to the embodiments of the present disclosure; and
FIG. 14 shows a block diagram of an exemplary electronic device for implementing the embodiments of the present disclosure.

Throughout all the accompanying drawings, the same or similar reference numerals are used to denote the same or similar components.

### DETAILED DESCRIPTION OF EMBODIMENTS

The exemplary embodiments of the present disclosure are described below with reference to the accompanying drawings, which include various details of the embodiments of the present disclosure to facilitate understanding, and which should be considered as merely illustrative. Therefore, those of ordinary skilled in the art should realize that various changes and modifications may be made to the embodiments described herein without departing from the scope and spirit of the present disclosure. In addition, for clarity and conciseness, descriptions of well-known functions and structures are omitted in the following description.

As mentioned above, the good performance of the recommendation system is based on a high correlation between an object recalled in a recalling step and a user feature or user data. Therefore, improving the recalling effect of the recalling step can significantly improve the subsequent ranking and presenting effect of the recommendation system. However, there are various problems with a conventional recalling step for the recommendation system. For example, a recalling method based on inverted index uses a designed rule to trigger, and the recalling effect depends on a manual rule design, so it is difficult to achieve the optimal recalling strategy.

For another example, the recalling method based on vector retrieval uses a user side vector and an object side vector to calculate a similarity. Therefore, due to a computational complexity of a deep learning model, the user side vector and the object side vector are also required to be mapped into a unified dimension, and a complex model cannot be used to support the information interaction between the two, which limits the improvement of the recalling effect. In addition, the mainstream recalling method implemented in the industry needs to calculate the object side vector in advance, and construct a retrieval structure for determining a recalled object based on the object side vector, so as to reduce the calculation times in the retrieval stage. However, an optimization target of the training stage of recalling model is inconsistent with that of the constructing stage of the retrieval structure, thereby affecting the recalling effect of recalling model.

In view of the above-mentioned problems and other potential problems in a conventional solution, the embodiments of the present disclosure propose a technical solution for constructing a recalling model. In the solution of constructing the recalling model of the present disclosure, the computing device is used to: obtain a tree structure parameter of a tree structure, in which the tree structure is used to index an object set used for recommendation; obtain a classifier parameter of a classifier, in which the classifier is used to sequentially predict, from a top layer of the tree structure to a bottom layer of the tree structure, a preference node set whose probability of being preferred by a user is ranked higher in each layer, and a preference node set of each layer subsequent to the top layer of the tree structure is determined based on a preference node set of a previous layer of the each layer; and construct a recalling model based on the tree structure parameter and the classifier parameter to determine a candidate object set for the user in the object set. The recalling model constructed according to the embodiments of the present disclosure takes the tree structure parameter and the classifier parameter as model parameters, thereby optimizing the training process and use process of the recalling model, and then improving the recalling result of the recalling model.

It should be noted that in the technical solution of the present disclosure, the acquisition, storage and application of the user's personal information comply with the provisions of relevant laws and regulations and do not violate public order and good customs.

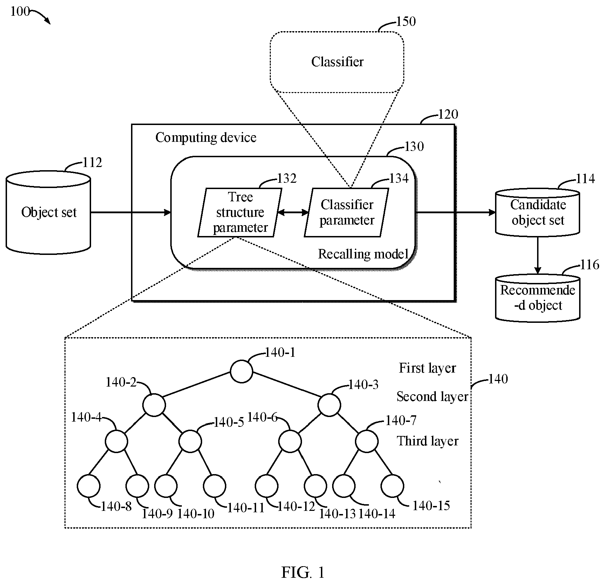

FIG. 1 shows a schematic diagram of an exemplary environment 100 in which some embodiments of the present disclosure may be implemented. As shown in FIG. 1, the exemplary environment 100 may include an object set 112, and the object set 112 includes objects (also known as articles or categories, etc.) that can be recommended to a user. For example, such objects may include: goods that the user may purchase, content (e.g., audio, video, images, news, books, etc.) that the user may view or read, advertisements that may be presented to the user, social information and location-based service content that may be recommended to the user, and so on. More generally, the objects in the object set 112 may include any data or information that can be recommended to the user. In some embodiments, the object set 112 may be a set of objects in a recommendation system that can be recommended to a user. In the exemplary scenario of FIG. 1, each object in the object set 112 may be represented in a digital form (e.g., vector representation) and provided to the computing device 120.

As shown in FIG. 1, the recalling model 130 may be implemented in the computing device 120. For example, the recalling model 130 may be used to implement the recalling step in a recommendation system associated with the object set 112. The recalling model 130 may determine a candidate object set 114 for a user in the object set 112. For example, based on user data related to a user, the recalling model 130 may predict a plurality of objects preferred (also known as interested) by the user in the object set 112, that is, the candidate object set 114. As a more intuitive illustration, in some exemplary scenarios, the object set 112 may include a large number of objects, such as millions or even hundreds of millions of objects. In contrast, the candidate object set 114 of interest to the user predicted by the recalling model 130 may include a smaller number of objects, such as tens to hundreds of objects. In some embodiments, based on the candidate object set 114 provided by the recalling model 130, the recommendation system may further determine (e.g., select) one or more objects recommended to the user, that is, a recommended object 116.

In the example illustrated in FIG. 1, the recalling model 130 may be constructed based on a tree structure parameter 132 and a classifier parameter 134. In the embodiments of the present disclosure, the tree structure parameter 132 may be used to describe the tree structure 140, and the tree structure 140 is used to index the object set 112 used for recommendation. Various objects in the object set 112 may correspond to different nodes in the tree structure 140. Therefore, in the context of the present disclosure, the tree structure 140 may also be referred to or represented as an index tree 140, and the two terms can be used interchangeably herein.

The tree structure 140 may include a plurality of layers from a top layer of the tree structure to a bottom layer of the tree structure, and each of the plurality of layers may include one or more nodes. For example, the top layer of tree structure 140 may include only root node, and a node in the bottom layer of tree structure 140 may be called leaf node as the node does not have a child node. In addition, a node in a non-bottom layer of the tree structure 140 can be called non-leaf node as the node has a child node. In some embodiments, each leaf node in the bottom layer of the tree structure 140 may correspond to an object in the object set 112, and each non-leaf node of the tree structure 140 may correspond to an object subset composed of a plurality of objects in the object set 112. In addition, each node in the tree structure 140 may have only one parent node.

In the specific example schematically illustrated in FIG. 1, the tree structure 140 includes first to fourth layers and nodes 140-1 to 140-15 in these layers. The first layer includes root node 140-1, the second layer includes nodes 140-2 and 140-3, the third layer includes nodes 140-4 to 140-7, and the fourth layer includes nodes 140-8 to 140-15. Among the nodes of the tree structure 140, nodes 140-8 to 140-15 are leaf nodes, which can respectively correspond to eight objects in the object set 112. Nodes 140-1 to 140-7 are non-leaf nodes, which can respectively correspond to subsets of the object set 112. For example, the node 140-6 may correspond to a subset composed of two objects corresponding to nodes 140-12 and 140-13, and so on.

It should be noted that although the tree structure 140 in FIG. 1 is illustrated as having a specific number of nodes and a specific topology, this is only schematic and is not intended to limit the scope of the present disclosure in any way. In other embodiments, the tree structure 140 may have any number of nodes and any topology. For example, in the example of FIG. 1, the tree structure 140 is a complete binary tree structure, each node has only two child nodes. However, the complete binary tree structure is only schematic, and the tree structure 140 of the embodiments of the present disclosure is not limited to this. In other embodiments, each non-leaf node of the tree structure 140 may have any number of child nodes.

The tree structure parameter 132 used to construct the recalling model 130 may represent the tree structure 140 in any appropriate representation method or form. For example, the tree structure parameter 132 may include a parameter used for describing the topology of the tree structure 140, and may also include a parameter of each node of the tree structure 140. More specifically, in some embodiments, the tree structure parameter 132 may be represented in a form of a matrix, and each element in the matrix may be an information for each node in the tree structure 140. Such node information may include, for example, an identifier of the node, an identifier of a parent node of the node, an identifier of a child node of the node, a vector representation of the node, and so on.

In other embodiments, the node information in the tree structure parameter 132 may further include any other information used for managing the node, such as when the node is added to the tree structure 140, a number of times the node is preferred by the user, a time period the node exists in the tree structure 140, a time period the node is not preferred by the user, and so on. In summary, the computing device 120 can completely determine the topology of the tree structure 140 and the information for each node in the tree structure 140 based on the tree structure parameter 132, and can add or delete relevant information for the node according to a specific application scenario and a requirement.

As further shown in FIG. 1, in addition to the tree structure parameter 132, the recalling model 130 is constructed based on the classifier parameter 134 of the classifier 150. As used herein, the classifier 150 may be used to sequentially predict, from a top layer of the tree structure to a bottom layer of the tree structure, a preference node set whose probability of being preferred by a user is ranked higher in each layer. For example, based on the user's relevant data or information (hereinafter referred to as user data) and the node information for each node in the tree structure 140, the classifier 150 may determine a probability of the user's interest in each node or a probability ranking of the user's interest in the nodes. Therefore, in some cases, the classifier 150 may also be referred to as an interest classifier, a preference classifier, a discriminator, an interest discriminator, a preference discriminator, and the like.

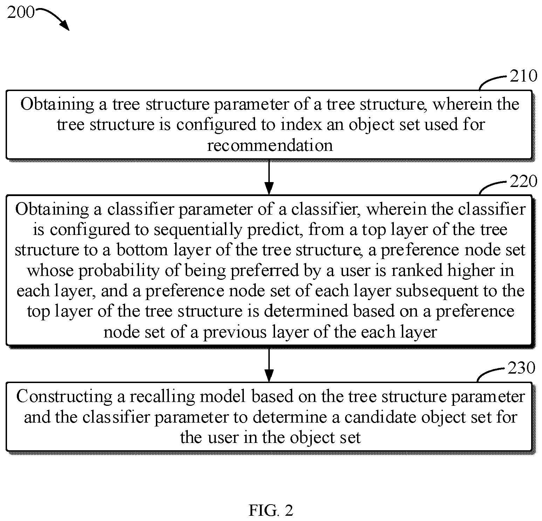

In some embodiments, the user data may be any user related information used to predict user preferences. For example, the user data may include user behavior information, user profile information, user context information, and so on. An exemplary process in which the classifier 150 determines a preference node set layer by layer in the tree structure 140 will be further described below with reference to FIG. 2. As used herein, the classifier parameter 134 may be a parameter used for describing the classifier 150. For example, the content contained in the classifier parameter 134 may be determined based on an algorithm or model used by the classifier 150. In summary, the computing device 120 may completely determine the classifier 150 based on the classifier parameter 134.

In some embodiments, the tree structure 140 may be a maximum heap tree based on an object feature. In the maximum heap tree structure, the leaf node of the tree structure 140 and the root node of the tree structure 140 can correspond to object classifications with different granularities, and the granularities of the object classifications can range from fine to coarse. Therefore, when the recalling model 130 performs the recalling retrieval on the objects, the classifier 150 can traverse the nodes in the tree structure 140 from the top layer of the tree structure 140 to the bottom layer of the tree structure 140 and determine a similarity between the user and each node, so as to predict the user interest from coarse to fine. In addition, a calculation of the similarity between the user and the node by the classifier 150 may not be limited to a vector inner product, but may support any complex deep learning model to calculate the similarity. In addition, the method based on the maximum heap tree can algorithmically support a complex interaction between the user side and the object side, and can control a computational complexity of online object retrieval of the recalling model 130.

The tree structure 140 can use the maximum heap tree participating in network training to implement an efficient retrieval structure for recalled objects. Such the tree structure 140 can be considered to be designed with reference to a thinking mode of the human brain, and establish a coarse to fine organization manner and a retrieval manner in terms of user interest, so as to significantly reduce the calculation times of the recalling model 130 in the process of retrieving objects. In some embodiments, corresponding to each layer of the tree structure 140, the classifier 150 may include a deep learning model trained for different interest granularities, which may also be referred to as a classifier unit herein. Therefore, the deep learning model (i.e., classifier unit) for each layer cannot be limited to calculating the vector inner product similarity, and can carry any advanced deep learning model. Such an embodiment will be further described below with reference to FIG. 2.

In some embodiments, the computing device 120 may include any device capable of implementing computing and/or control functions, which may be any type of fixed computing device, mobile computing device or portable computing device, including, but not limited to, a special-purpose computer, a general-purpose computer, a desktop computer, a laptop computer, a notebook computer, a netbook computer, a tablet computer, a multimedia computer, a mobile phone, a general processor, a microprocessor, a microcontroller, or a state machine. The computing device 120 may be implemented as an individual computing device or a combination of computing devices, such as a combination of a digital signal processor (DSP) and a microprocessor, a plurality of microprocessors, one or more microprocessors combined with a DSP core, or any other such configuration.

Further, it should be understood that FIG. 1 only schematically shows objects, units, elements, or components related to embodiments of the present disclosure. In practice, the exemplary environment 100 may also include other objects, units, elements, or components, and so on. In addition, the specific number of objects, units, elements, or components shown in FIG. 1 is only schematic and is not intended to limit the scope of the present disclosure in any way. In other embodiments, the exemplary environment 100 may include any appropriate number of objects, units, elements, or components, etc. Therefore, the embodiments of the present disclosure are not limited to the specific scenario illustrated in FIG. 1, but are generally applicable to any technical environment for constructing a recalling model. An exemplary process for constructing a recalling model of the embodiments of the present disclosure is described below with reference to FIG. 2.

FIG. 2 shows a flowchart of an exemplary process 200 of a method of processing information according to the embodiments of the present disclosure. In some embodiments, the exemplary process 200 may be implemented by the computing device 120 in the exemplary environment 100, for example, by a processor or processing unit of the computing device 120, or by various functional modules of the computing device 120. In other embodiments, the exemplary process 200 may also be implemented by a computing device independent of the exemplary environment 100, or may be implemented by other units or modules in the exemplary environment 100. For ease of illustration, the exemplary process 200 will be described with reference to FIG. 1.

At block 210, the computing device 120 is used to obtain a tree structure parameter 132 for the tree structure 140 of the recalling model 130. As described above, the tree structure 140 is used to index the object set 112 that can be used for recommendation. In some embodiments, each leaf node in the tree structure 140 may correspond to an object in the object set 112. In addition, each non-leaf node in the tree structure 140 may correspond to an object subset composed of a plurality of objects in the object set 112. For example, objects in such object subset can have a common feature. Therefore, in some embodiments, each non-leaf node in the tree structure 140 can be understood as corresponding to one object classification, and the non-leaf nodes in different layers of the tree structure 140 can correspond to object classifications with different granularities.

In some embodiments, as the function of the tree structure 140 is to index each object in the object set 112, the computing device 120 may determine the tree structure 140 based on the object set 112 and further obtain the tree structure parameter 132. As described above, the objects in the object set 112 may be any object used for recommendation to the user. In some embodiments, as the application scenario of the recommendation system changes, the types of objects in the object set 112 may also change. For example, in a case that the recommendation system is applied to an online shopping scenario, the object set 112 may include various goods that can be purchased by the user. As another example, in a case that the recommendation system is applied to a scenario in which content (e.g., audios, videos, images, news, books, etc.) is recommended to the user, the object set 112 may include various content used for recommendation to the user. As another example, in a case that the recommendation system is applied to web browsing or any other scenario (e.g., an information search scenario) in which advertisements can be recommended to the user, the object set 112 may include various advertisements for pushing to the user. As another example, in a case that the recommendation system is applied to a scenario of a social network, the object set 112 may include social information for recommendation to users.

In general, the computing device 120 may process the object set 112 by using any appropriate classification manner or other processing manner to construct the tree structure 140 and obtain the tree structure parameter 132. In some embodiments, the computing device 120 may construct the tree structure 140 based on classification information for each object in the object set 112. For example, if various mobile phones are included in the object set 112, the computing device 120 may create in the tree structure 140 a leaf node corresponding to each mobile phone. Then, the computing device 120 may determine a non-leaf node in a previous layer of the layer at which the leaf node is located in the tree structure 140 according to mobile phone classifications with different granularities. As a non-limiting example, a non-leaf node may correspond to an Android-based mobile phone, an Apple-based mobile phone, a mobile phone based on other operating systems, and so on. It will be understood that as the objects in the object set 112 change, the classification information for the objects used by the computing device 120 to create the tree structure 140 will also change.

In other embodiments, the computing device 120 may cluster objects in the object set 112 using an appropriate clustering algorithm to determine a plurality of object classifications for constructing the tree structure 140. For example, each object in the object set 112 may be vectorized into an object vector representation, that is, different objects are represented by different object vectors. Therefore, the computing device 120 can use the clustering algorithm to process the object vector representation of the object, so that the objects in the object set 112 can be clustered into different categories. The objects in each category will have certain similarity, while the objects in different categories have low similarity.

As a non-limiting example, the clustering algorithms that the computing device 120 can adopt include, but are not limited to, K-Means clustering algorithm, mean shift clustering algorithm, density-based clustering method (DBSCAN), maximum expectation (EM) clustering algorithm using Gaussian mixture model (GMM), aggregation hierarchical clustering, graph group detection clustering algorithm, etc. More generally, the computing device 120 may cluster the objects in the object set 112 using any existing or future developed clustering algorithm to construct the tree structure 140 and obtain the tree structure parameter 132.

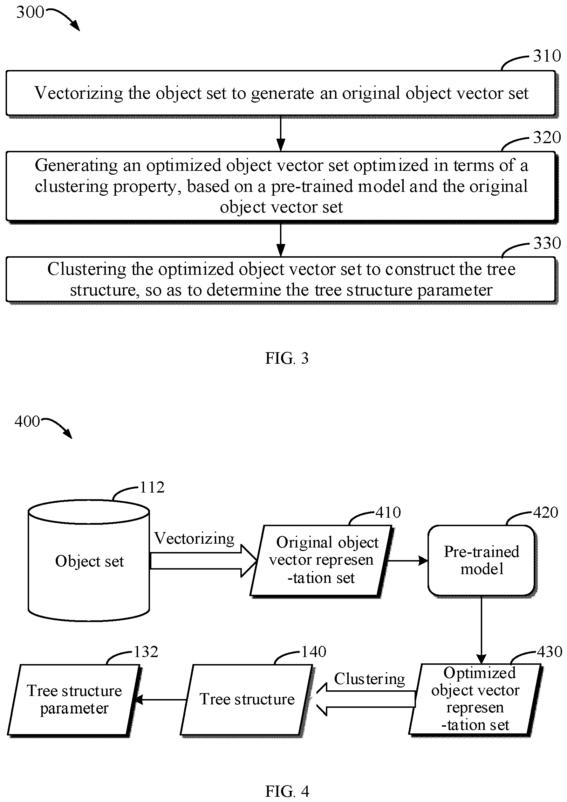

In another embodiment, in order to achieve a better clustering effect of each object in the object set 112, the computing device 120 may first convert an original object vector representation of each of the objects in the object set 112 into an optimized object vector representation using a pre-trained model. Compared with the original object vector representation, the optimized object vector representation will have a better clustering property. Then, the computing device 120 may perform clustering on these optimized object vector representations using a clustering algorithm to construct the tree structure 140 and obtain the tree structure parameter 132. In this way, an initialization of the tree structure 140 realized by clustering can be more efficient and a convergence speed can be accelerated, so that the effect of the recalling model 130 can be improved. Such embodiments will be further described below with reference to FIGS. 3 and 4.

At block 220, the computing device 120 is used to obtain the classifier parameter 134 of the classifier 150 for the recalling model 130. In general, the classifier 150 of the recalling model 130 may be any algorithm, model, unit, component, or module for predicting the probability that the user prefers an object, or the probability ranking of the user's interest in a plurality of objects, etc. For example, the classifier 150 may calculate a correlation degree between the user data and an object representation of an object in the object set 112. Based on the correlation degree between the user data and the object representation, the classifier 150 may determine the probability that the user prefers an object. Alternatively, the classifier 150 may not specifically determine the probability that the user is interested in an object, but determine the probability ranking of the user's interest in a plurality of objects. In some embodiments, the classifier 150 of the recalling model 130 may be a machine learning based model, such as any appropriate deep learning network, fully connected network, attention mechanism based network, etc. In other embodiments, the classifier 150 of the recalling model 130 may also be a non-machine learning based model. Further, as described above, the classifier parameter 134 may be a parameter for describing the classifier 150 of the recalling model 130. For example, the content contained in the classifier parameter 134 may depend on the specific algorithm or model used by the classifier 150. In summary, the computing device 120 may completely determine the classifier 150 based on the classifier parameter 134.

In some embodiments, the classifier 150 of the recalling model 130 may be used to sequentially predict, from a top layer of the tree structure 140 to a bottom layer of the tree structure 140, a preference node set whose probability of being preferred by a user is ranked higher in each layer. For example, based on the user data (such as user behavior data, user profile data, user context data, etc.) and the node information for each node, the classifier 150 may determine probabilities that the user is interested in a plurality of nodes or the probability ranking of interest in a plurality of nodes in each layer of the tree structure 140. As a more specific example, in the tree structure 140 illustrated in FIG. 1, for nodes 140-2 and 140-3 in the second layer, the classifier 150 may predict the probability ranking of users' interest in the nodes 140-2 and 140-3 based on user data and node information for the nodes 140-2 and 140-3. For nodes 140-4 to 140-7 in the third layer, the classifier 150 may predict the probability ranking of users' interest in the nodes 140-4 to 140-7 based on user data and node information for the nodes 140-4 to 140-7. Similarly, for nodes 140-8 to 140-15 in the fourth layer, the classifier 150 may predict the probability ranking of users' interest in the nodes 140-8 to 140-15 based on user data and node information for the nodes 140-8 to 140-15.

In addition, as the number of objects in the object set 112 used for recommendation in the recommendation system may be large, the classifier 150 may not be able to predict the probabilities or probability ranking of user preferences directly for all leaf nodes in the tree structure 140. In this way, the classifier 150 may determine a node set preferred by the user in each layer of the tree structure 140 by means of beam search. In such the beam search, the classifier 150 may limit nodes to be considered in a layer to child nodes of nodes preferred by the user in a previous layer of the layer. As a more specific example, in the tree structure 140 illustrated in FIG. 1, in a case that a node set preferred by the user in the third layer includes nodes 140-4 and 140-6, when determining a node set preferred by the user in the fourth layer, the classifier 150 may only consider child nodes of the nodes 140-4 and 140-6, and the child nodes of the nodes 140-4 and 140-6 include nodes 140-8, 140-9, 140-12 and 140-13. If the classifier 150 determines a preference node set whose probability of being preferred by the user is ranked higher, the preference node set in a layer of the tree structure 140 can be determined based on a preference node set in a previous layer of the layer.

In some embodiments, the computing device 120 may correspondingly determine the classifier 150 to have a suitable classifier structure based on the tree structure 140. For example, the computing device 120 may use a separate and unified classifier 150 for the whole tree structure 140. For all nodes in different layers in the tree structure 140, the computing device 120 may use a same classifier 150 to determine the user's preference probabilities or probability ranking for the nodes. In this way, the structure of the classifier 150 of the recalling model 130 can be simplified, thereby saving the computing resource used by the computing device 120 to implement the classifier 150.

In other embodiments, considering the multi-layer topology of the tree structure 140, the classifier 150 may include a plurality of classifier units corresponding to a plurality of layers subsequent to the top layer of the tree structure 140. Each of the plurality of classifier units of classifier 150 may be used to predict probabilities or probability ranking of nodes being preferred by the user in a corresponding layer. For example, in the example of tree structure 140 illustrated in FIG. 1, the classifier 150 may have three classifier units corresponding to layers 2 to 4, respectively. In this way, the computing device 120 can implement classifier units corresponding to the plurality of layers of the tree structure 140 with different object classification granularities. Therefore, these classifier units can predict the user's preference for nodes with different object classification granularities, so as to achieve higher prediction accuracy, and then optimize the recalling result of the recalling model 130.

At block 230, after obtaining the tree structure parameter 132 and the classifier parameter 134, the computing device 120 constructs the recalling model 130 based on the tree structure parameter 132 and the classifier parameter 134. As described above, the recalling model 130 constructed by the computing device 120 may be used to determine the candidate object set 114 for the user in the object set 112. For example, in an exemplary scenario, a large number (e.g., millions to hundreds of millions) of objects may be included in the object set 112, and the recalling model 130 may determine a small number (e.g., tens to hundreds) of objects of interest to the user among the large number of objects in the object set 112. In some embodiments, the recommendation system associated with the recalling model 130 may further determine an object 116 recommended to the user from the candidate object set 114. For example, the recommendation system may rank a plurality of candidate objects in the candidate object set 114 based on a ranking strategy (e.g., considering relevant business indicators, such as click rate, payment rate, and estimated viewing time period, etc.), so as to determine the object 116 recommended to the user.

In general, the computing device 120 may construct the recalling model 130 based on the tree structure parameter 132 and the classifier parameter 134 in any appropriate manner so that the tree structure parameter 132 and the classifier parameter 134 can be optimized or adjusted as model parameters of the recalling model 130 (such as through a back propagation algorithm, etc.). For example, after training the recalling model 130, the tree structure parameter 132 can be optimized or adjusted as a model parameter of the recalling model 130. Such optimization or adjustment may include not only optimizing a vector representation of each node in the tree structure 140, but also updating location information for the node in the tree structure 140, that is, updating the topology of the tree structure 140. For another example, after training the recalling model 130, the classifier parameter 134 can also be optimized or adjusted as a model parameter of the recalling model 130. Such optimization or adjustment may include, for example, optimizing a network parameter for implementing the deep learning network of classifier 150.

In some embodiments, the computing device 120 may construct different levels or units of the recalling model 130 using the tree structure parameter 132 and the classifier parameter 134, respectively. Specifically, the computing device 120 may use the tree structure parameter 132 to construct a level of the recalling model 130 for organizing the object set 112 into the tree structure 140. In addition, the computing device 120 may use the classifier parameter 134 to construct another level of the recalling model 130 to determine a probability that each node is preferred by the user or a probability ranking of the nodes being preferred by the user in the tree structure 140 according to the tree structure 140 using the classifier 150. Thus, both the tree structure parameter 132 and the classifier parameter 134 can be optimized or adjusted as model parameters of the recalling model 130.

In other embodiments, the computing device 120 may also use both the tree structure parameter 132 and the classifier parameter 134, together with other relevant parameters for constructing the model, as the model parameters of the recalling model 130 to organize and design the model as a whole, so as to construct the recalling model 130. It can be seen that through the exemplary process 200, the computing device 120 can take the tree structure parameter 132 and the classifier parameter 134 as model parameters to construct the recalling model 130, so as to realize an integrated training of the tree structure 140 and classifier 150 in the recalling model 130. Therefore, the training process and use process of the recalling model 130 are optimized, and then the recalling result of the recalling model 130 is improved.

As mentioned above when describing block 210 of FIG. 2, in order to achieve a better clustering effect of each object in the object set 112, the computing device 120 may first convert the original object vector representation of each object in the object set 112 into the optimized object vector representation using a pre-trained model. In contrast to the original object vector representations, these optimized object vector representations will have a better clustering property. Then, the computing device 120 may perform clustering on these optimized object vector representations using a clustering algorithm to construct the tree structure 140 and obtain the tree structure parameter 132. Such embodiments will be described in detail below with reference to FIGS. 3 and 4.

FIG. 3 shows a flowchart of an exemplary process 300 of determining a tree structure parameter 132 based on an object set 112 according to the embodiments of the present disclosure. In some embodiments, the exemplary process 300 may be implemented by the computing device 120 in the exemplary environment 100, for example, by a processor or processing unit of the computing device 120, or by various functional modules of the computing device 120. In other embodiments, the exemplary process 300 may also be implemented by a computing device independent of the exemplary environment 100, or may be implemented by other units or modules in the exemplary environment 100. For ease of illustration, the exemplary process 300 will be described with reference to FIG. 4.

FIG. 4 shows an exemplary block diagram representation 400 of determining a tree structure parameter 132 based on an object set 112 according to the embodiments of the present disclosure. In the block diagram representation 400, the same or similar components shown in FIG. 1 will be indicated by the same or similar reference numerals. Referring to FIGS. 3 and 4, at block 310 of FIG. 3, the computing device 120 may vectorize the object set 112 to generate an original object vector set 410. For example, each original object vector in the original object vector set 410 corresponds to an object in the object set 112. In some embodiments, the computing device 120 may randomly vectorize each object in the object set 112 to obtain the original object vector set 410. In other embodiments, the computing device 120 may also vectorize the objects in the object set 112 in other appropriate ways to obtain the original object vector set 410. For example, the computing device 120 may vectorize the objects in the object set 112 based on different names or identifiers of the objects.

At block 320 of FIG. 3, the computing device 120 may generate an optimized object vector set 430 optimized in terms of a clustering property based on the pre-trained model 420 and the original object vector set 410. For example, each optimized object vector in the optimized object vector set 430 corresponds to an object in the object set 112. Generally, the pre-trained model 420 may be a task independent machine learning model obtained from large-scale data by machine learning methods (such as deep learning, self-supervised learning, unsupervised learning, etc.). Depending on a specific application scenario, the pre-trained model 420 may include one or a combination of various pre-trained models. For example, for an application scenario of natural language processing (NLP), the pre-trained model 420 may include ERNIE model, BERT model, ELMo model, etc. For an application scenario of image processing, the pre-trained model 420 may include a target detection model, a face recognition model, a semantic image segmentation model, an image description model, etc. More generally, the pre-trained model 420 may include any existing or future developed pre-trained model capable of optimizing the clustering property of the original object vector set 410.

At block 330 of FIG. 3, the computing device 120 may perform clustering on the optimized object vector set 430 to construct the tree structure 140 to determine the tree structure parameter 132. For example, the computing device 120 may cluster the optimized object vector set 430 using a clustering algorithm. Through the exemplary process 300, based on pre-trained information provided by the pre-trained model 420, the computing device 120 can significantly optimize an initialization mode of the tree structure 140, so as to realize an efficient initialization of an object retrieval structure, accelerate the convergence speed, and then improve the model effect of the recalling model 130. In other words, after the original object vector set 410 is processed by the pre-trained model 420, a degree of discrimination between object vectors can be increased, so that the object vectors have a better clustering property. Therefore, the pre-trained model 420 can make the configuration of the tree structure 140 more reasonable, converge faster, and have a better effect.

In some embodiments, after constructing the recalling model 130, the computing device 120 may use historical user data for one or more users to train the recalling model 130 to optimize or adjust the model parameters (e.g., the tree structure parameter 132 and the classifier parameter 134) of the recalling model 130, so as to obtain a more reasonable tree structure 140 and a more accurate classifier 150. Finally, the recalling result of the recalling model 130 is optimized. For example, the recalling result of the trained recalling model 130 may have a higher recalling rate, accuracy, etc.

More specifically, in order to train the recalling model 130, the computing device 120 may first acquire a positive sample and a negative sample for training the recalling model 130. For example, if historical user data for a user indicates that the user is interested in a leaf node in the tree structure 140 (i.e., an object in the object set 112), the leaf node and the related historical user data can be used as a positive sample for training the recalling model 130. It should be noted that the user's preference for a leaf node (or an object) can be determined based on the user's explicit feedback, implicit feedback, a combination of the two, or any other information that can reflect the user's preference. In addition, other leaf nodes that the user does not show interest and the user's historical user data can be used as negative samples for training the recalling model 130.

For all leaf nodes in the bottom layer of the tree structure 140, the selection of the positive sample and the negative sample can be more intuitive. As the user's historical user data can directly reflect whether the user prefers a leaf node (an object) or not. However, for a non-leaf node in tree structure 140, the selection of the positive sample and the negative sample may not be direct, but some designs are required. For example, an indicator indicating whether a non-leaf node in the tree structure 140 is preferred by the user or not is generally not contained in the historical user data, because the concept of the object classifications with different granularities corresponding to the non-leaf nodes may be meaningful only within the recalling model 130 and not provided to the user.

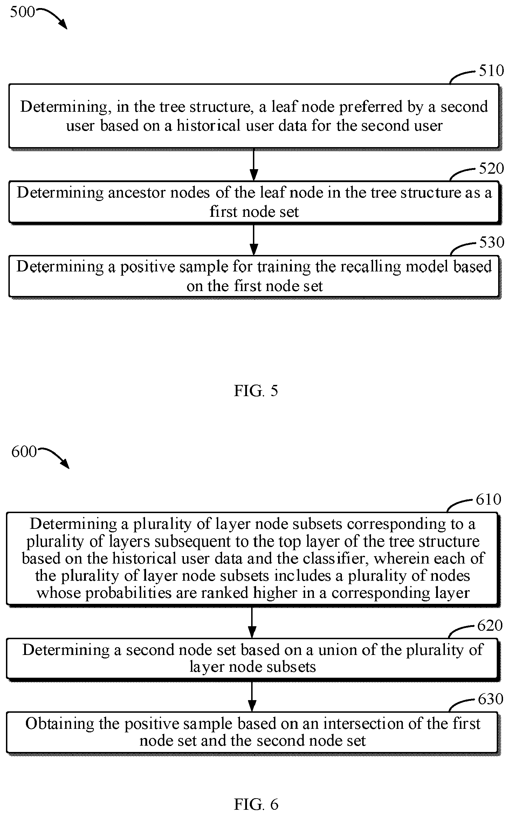

In some designs, the computing device 120 may determine all ancestor nodes (also known as predecessor nodes) of a leaf node that has been determined as a positive sample, as positive samples being preferred by the user. Accordingly, the computing device 120 may determine all non-ancestor nodes of the leaf node that has been determined as the positive sample, as negative samples that the user is not interested in. In other words, in such a design, if the user is interested in a leaf node, the computing device 120 assumes that the user is interested in all ancestor nodes of the leaf node, which is reasonable in most cases. In this way, the computing device 120 may obtain more positive samples for training the recalling model 130 according to a reasonable assumption. Such an embodiment will be further described below with reference to FIG. 5.

FIG. 5 shows a flowchart of an exemplary process 500 of determining a positive sample for training a recalling model 130 according to the embodiments of the present disclosure. In some embodiments, the exemplary process 500 may be implemented by the computing device 120 in the exemplary environment 100, for example, by a processor or processing unit of the computing device 120, or by various functional modules of the computing device 120. In other embodiments, the exemplary process 500 may also be implemented by a computing device independent of the exemplary environment 100, or may be implemented by other units or modules in the exemplary environment 100. For ease of illustration, the exemplary process 500 will be described with reference to FIG. 1.

First, it should be noted that since a user involved in the exemplary process 500 and a user mentioned in the exemplary process 200 may not be a same user, for the accuracy of description, the user mentioned in the exemplary process 200 is hereinafter referred to as a first user and the user involved in the exemplary process 500 is hereinafter referred to as a second user. However, it will be understood that although the first user and the second user are used to describe the users in the exemplary process 200 and the exemplary process 500, respectively, in some cases, the first user and the second user may also be the same user.

At block 510, the computing device 120 may determine, in the tree structure 140, a leaf node preferred by a second user based on historical user data for the second user. For example, if the historical user data for the second user indicates that the second user has provided explicit feedback, implicit feedback, a combination of the two, or any other information that can reflect the user's preference for a leaf node (e.g., an object in the object set 112) in the tree structure 140, the leaf node may be determined as a leaf node preferred by the second user. In some embodiments, the explicit feedback of the second user may include scoring, rating, liking, etc. for the object. The implicit feedback of the second user may include browsing, clicking, adding to the shopping cart, forwarding, etc. The embodiments of the present disclosure are not limited to preference indication manners listed here. More generally, the computing device 120 may determine the leaf node preferred by the second user from the historical user data in any appropriate manner.

At block 520, the computing device 120 may determine, in the tree structure 140, ancestor nodes of the leaf node preferred by the second user as a first node set. For example, referring to the example of tree structure 140 illustrated in FIG. 1, if the leaf node preferred by the second user is 140-12. In this case, the computing device 120 may determine that ancestor nodes of the leaf node 140-12 in the tree structure 140 are nodes 140-6, 140-3 and 140-1. Thus, in this example of the tree structure 140, the computing device 120 may determine that the first node set includes the nodes 140-6, 140-3, and 140-1.

At block 530, the computing device 120 may determine a positive sample for training the recalling model 130 based on the first node set. As mentioned above, in some embodiments, the computing device 120 may directly determine the leaf node preferred by the second user and the first node set as positive samples for training the recalling model 130. In other words, if the second user is interested in a leaf node, the computing device 120 assumes that the second user is interested in all ancestor nodes of the leaf node. In this way, the computing device 120 can obtain more positive samples for training the recalling model 130 according to a reasonable assumption. Continuing with the above-mentioned example, if the second user is interested in the leaf node 140-12, the computing device 120 may determine the leaf node 140-12 and the first node set composed of nodes 140-6, 140-3 and 140-1 as positive samples for training the recalling model 130.

However, if all ancestor nodes of a leaf node that the user is interested in are determined as positive samples for training the recalling model 130, such a training target is actually inconsistent with the way (e.g., beam search) the recalling model 130 is used in a subsequent recalling step. Such inconsistency may cause the recalling model 130 to "learn bad", and then affect the recalling accuracy of the recalling model 130. Therefore, in some embodiments, in order to further optimize the recalling result of the trained recalling model 130, the computing device 120 may further select from the first node set determined above, so as to determine a subset of the first node set as a positive sample for training the recalling model 130.

For example, in order to make the training process of the recalling model 130 more consistent with the use process of the recalling model 130, the computing device 120 can cause the selection manner of the positive sample in the training stage of the recalling model 130 to be consistent with the beam search manner of determining the preference node set in each layer of the tree structure 140 in the use stage of the recalling model 130. Thus, the positive sample is more optimally selected in the first node set. In this way, the training target of the recalling model 130 in the training process and the object retrieval target in the use process of the recalling model 130 can be unified, and the recalling accuracy of the recalling model 130 is further improved. Such an embodiment is described below with reference to FIG. 6.

FIG. 6 shows a flowchart of an exemplary process 600 of determining a positive sample based on an intersection of two node sets according to the embodiments of the present disclosure. In some embodiments, the exemplary process 600 may be implemented by the computing device 120 in the exemplary environment 100, for example, by a processor or processing unit of the computing device 120, or by various functional modules of the computing device 120. In other embodiments, the exemplary process 600 may also be implemented by a computing device independent of the exemplary environment 100, or may be implemented by other units or modules in the exemplary environment 100. For ease of illustration, the exemplary process 600 will be described with reference to FIG. 1.

At block 610, the computing device 120 may determine a plurality of layer node subsets corresponding to a plurality of layers subsequent to the top layer of the tree structure 140 based on the historical user data for the second user and the classifier 150 of the recalling model 130, in which each of the plurality of layer node subsets includes a plurality of nodes whose probabilities are ranked higher in a corresponding layer. That is, based on the historical user data for the second user and the classifier 150, the computing device 120 may determine the nodes whose probabilities are ranked higher in each layer of the tree structure 140 by using the beam search manner when the recalling model 130 is used in the recalling step. In some embodiments, the number of nodes whose probabilities are ranked higher determined in each layer may be predetermined, which may be consistent with the number of nodes retained by the recalling model 130 in each layer during subsequent use.

Continuing with the specific example described above, it is assumed that in the tree structure 140 illustrated in FIG. 1, the computing device 120 determines two nodes whose probabilities are ranked higher in each layer. In addition, it is further assumed that based on the historical user data for the second user and classifier 150, nodes whose probabilities are ranked higher in the second layer determined by the computing device 120 are nodes 140-2 and 140-3, and nodes whose probabilities are ranked higher in the third layer determined by the computing device 120 are nodes 140-5 and 140-7. It should be noted that since whether the leaf node in the bottom layer of the tree structure 140 is preferred or not can be determined directly from the historical user data, the determining is accurate. Therefore, the beam search used in the training stage no longer needs to be performed to the bottom layer of the tree structure 140. In addition, it should also be noted that since the top layer of the tree structure 140 only includes the root node 140-1, the computing device 120 can always assume that the root node 140-1 is preferred by the user, and the beam search does not need to be performed for the top layer of the tree structure 140.

At block 620, the computing device 120 may determine a second node set based on a union of the plurality of layer node subsets. For example, in the specific example described above, the computing device 120 may determine that the union (the second node set) of the plurality of layer node subsets includes nodes 140-2, 140-3, 140-5, and 140-7. At block 630, the computing device 120 may obtain a positive sample for training the recalling model 130 based on an intersection of the first node set and the second node set. For example, in the specific example described above, the first node set includes nodes 140-6, 140-3, and 140-1, and the second node set includes nodes 140-2, 140-3, 140-5, and 140-7. Therefore, the computing device 120 may determine that the intersection of the first node set and the second node set includes node 140-3. Further, as explained above, the computing device 120 may determine the root node 140-1 and the leaf node 140-12 as positive samples. That is, for this specific example, the positive samples finally determined by the computing device 120 are nodes 140-12, 140-3 and 140-1. In this way, compared with the exemplary process 500 illustrated in FIG. 5, the computing device 120 can avoid taking the node 140-6 not searched through the beam search in the training stage as a positive sample, so that the training target in the training stage of the recalling model 130 is consistent with the object retrieval target in the use stage of the recalling model 130, and the training process of the recalling model 130 is further optimized.

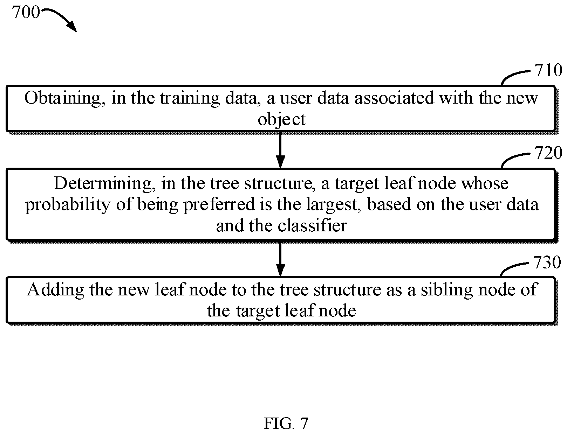

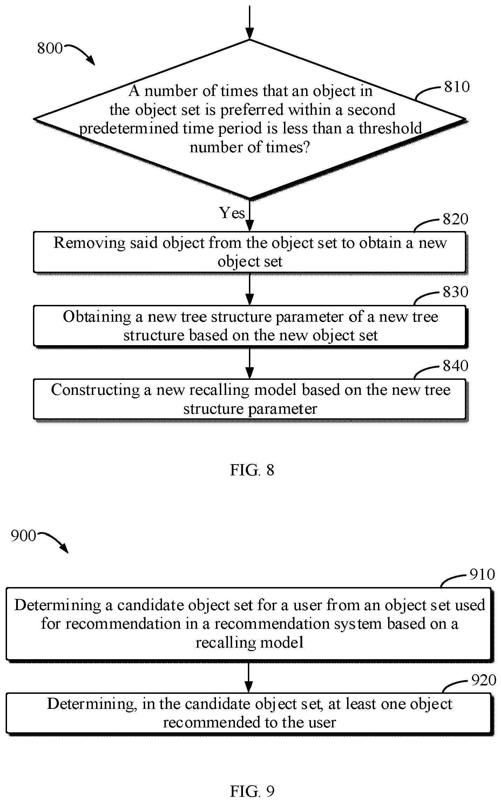

In some embodiments, the recalling model 130 can also support streaming training and can dynamically adjust the model parameter (e.g., the tree structure parameter 132) of the recalling model 130, so that the application scenario of the recalling model 130 can be extended. For example, the streaming training of the recalling model 130 may include an incremental updating of the tree structure 140 and a full updating of the tree structure 140. As used herein, the incremental updating of the tree structure 140 means that the computing device 120 may add a new leaf node to the tree structure 140 during the training process of the recalling model 130. As an example, the incremental updating of the tree structure 140 may be performed in a predetermined cycle (e.g., one hour). In addition, the full updating of the tree structure 140 means that in a predetermined full updating cycle (e.g., one day), the computing device 120 can reconstruct a new tree structure 140 based on all objects used for recommendation, because the objects used for recommendation may change over time during the training process of the recalling model 130. For example, a new object not indexed by the tree structure 140 may be introduced into the training data used to train the recalling model 130, and an original object in the tree structure 140 may be deleted. Hereinafter, the incremental updating process of the tree structure 140 will be first introduced, and an exemplary manner of incremental updating will be described with reference to FIG. 7. Then, the full updating process of the tree structure 140 will be introduced, and an exemplary manner of full updating will be described with reference to FIG. 8.

In order to incrementally update the tree structure 140, the computing device 120 may determine whether the training data for training the recalling model 130 contains a new object that does not belong to the object set 112 or not. In some embodiments, if the computing device 120 detects an existence of a new object in the training data that is not included in the object set 112, the computing device 120 may directly determine the existence of the new object and may immediately perform an incremental updating of the tree structure 140, that is, insert the new object into the tree structure 140. Alternatively, the computing device 120 may not immediately perform an incremental updating of the tree structure 140, but record the existence of the new object, and then insert one or more new objects detected in a predetermined cycle into the tree structure 140 according to the predetermined cycle.

In other embodiments, considering that an object corresponding to a leaf node in the tree structure 140 may preferably also be of interest to other users, that is, the object used for recommendation is preferably an object of widespread interest. Based on this consideration, if a new object preferred by a user once is inserted into the tree structure 140, a storage space and calculation amount of the computing device 120 may be wasted. Therefore, in order to avoid adding a new object with fewer user preferences to the tree structure 140, and to maintain the relative stability of the tree structure 140, the computing device 120 may perform incremental updating of the tree structure 140 for a new object that meet a certain condition. For example, if the computing device 120 determines that the number of users who prefer a new object within a predetermined time period (hereinafter also referred to as a first predetermined time period) is greater than a threshold number based on the training data, the computing device 120 may determine that a new object is contained in the training data. In some embodiments, the first predetermined time period may be equal to the cycle of incremental updating of the tree structure 140 described above. That is, during the cycle of incremental updating, if a new object is preferred by more than a certain number of users, the computing device 120 may consider that the new object is worth adding to the tree structure 140.

No matter what manners described above is used to determine whether a new object contained in the training data or not, if the computing device 120 determines that the training data for training the recalling model 130 contains a new object that does not belong to the object set 112, the computing device 120 may create a new leaf node corresponding to the new object. Then, the computing device 120 may insert the created new leaf node into the tree structure 140, thereby realizing an incremental updating of the tree structure 140. The computing device 120 may insert the new leaf node into the tree structure 140 in various appropriate manners. In some embodiments, the new leaf node may be randomly inserted subsequent to a non-leaf node in a sub-bottom layer of the tree structure 140 as a child node of the non-leaf node. That is, the computing device 120 may randomly determine a target non-leaf node among non-leaf nodes in the sub-bottom layer of the tree structure 140. Then, the computing device 120 may add the new leaf node to the tree structure 140 as a child node of the target non-leaf node. In this manner, the computing resource of the computing device 120 for inserting the new leaf node may be minimized. In other embodiments, the computing device 120 may determine the most suitable position for inserting the new leaf node into the tree structure 140 based on the beam search manner. Such an embodiment is described below with reference to FIG. 7.

FIG. 7 shows a flowchart of an exemplary process 700 of adding a new leaf node to a tree structure 140 according to the embodiments of the present disclosure. In some embodiments, the exemplary process 700 may be implemented by the computing device 120 in the exemplary environment 100, for example, by a processor or processing unit of the computing device 120, or by various functional modules of the computing device 120. In other embodiments, the exemplary process 700 may also be implemented by a computing device independent of the exemplary environment 100, or may be implemented by other units or modules in the exemplary environment 100. For ease of illustration, the exemplary process 700 will be described with reference to FIG. 1.

At block 710, the computing device 120 may obtain, in the training data, user data associated with a new object. For example, the training data of the user training recalling model 130 is usually acquired in a form of "object and user data" pairing. Therefore, if the computing device 120 determines that an object in the training data is a new object, the computing device 120 can simultaneously obtain user data corresponding to the new object, that is, relevant user data for the user interested in the new object. In some embodiments, there may be a plurality of user data associated with the new object. In other words, in the training data, the computing device 120 may determine that the new object is associated with a plurality of user data for a plurality of users, that is, the new object is preferred or interested by a plurality of users. Hereinafter, a plurality of user data associated with the new object is also referred to as a plurality of candidate user data.

In such an embodiment, in order to obtain a user data associated with a new object from a plurality of candidate user data, the computing device 120 may determine the user data based on one candidate user data randomly selected among the plurality of candidate user data. As such, the computing resource used by the computing device 120 to determine the user data may be minimized. Additionally or alternatively, the computing device 120 may determine the user data based on an average candidate user data (e.g., as a user portrait) determined based on the plurality of candidate user data. In this way, the computing device 120 can more comprehensively and totally determine the user data for the user who prefers the new object. Additionally or alternatively, the computing device 120 may determine the user data based on a candidate user data corresponding to a user with the largest weight (e.g., a user who has used the recommendation system for the longest time, the core user, etc.) among the plurality of candidate user data. In this way, the computing device 120 can strike a balance between the computing resource used to determine the user data and the accuracy of the user data.

At block 720, the computing device 120 may determine a target leaf node whose probability of being preferred is the largest in the tree structure 140 based on the obtained user data and the classifier 150 of the recalling model 130. For example, according to the user data associated with the new object, the computing device 120 may use the classifier 150 to sequentially determine, from the top layer of the tree structure 140 to the bottom layer of the tree structure 140, a preferred node subset in each layer in the beam search manner, until the leaf node with the largest probability of being interested by the user in the bottom layer of the tree structure 140 is determined as the target leaf node. At block 730, the computing device 120 may add the new leaf node to the tree structure 140 as a sibling node of the target leaf node. That is, the computing device 120 may first determine a parent node of the target leaf node, and then insert the new leaf node into the tree structure 140 as a child node of the parent node. In this way, the new leaf node can be added to the most suitable position in the tree structure 140 to optimize the tree structure parameter 132, that is, the model parameter of the recalling model 130, so as to improve the training effect and recalling result of the recalling model 130.

As mentioned above, in addition to the incremental updating, the computing device 120 may also perform a full updating of the tree structure 140. For example, the full updating of the tree structure 140 may be performed in a predetermined cycle (e.g., one day). In some embodiments, the full updating of the tree structure 140 may be performed at night when the traffic of the recalling model 130 is small, so as to avoid affecting the normal operation of the recommendation system based on the recalling model 130. In addition, in some embodiments, the process of full updating the tree structure 140 may introduce an "exit" mechanism to an object in the object set 112. That is, when a predetermined condition is met, the object in the object set 112 may be excluded from the object set 112 to obtain a new object set 112, and a new tree structure 140 may be constructed based on the new object set 112. In this way, the computing device 120 can ensure that the tree structure 140 of the recalling model 130 indexes an object that the user may be interested in, and then optimize the recalling result of the recalling model 130. In addition, the computing resource or storage resource used by the computing device 120 to process the tree structure 140 may also be saved. Such an embodiment is described below with reference to FIG. 8.

FIG. 8 shows a flowchart of an exemplary process 800 of constructing a new recalling model 130 after removing an object from the object set 112 according to the embodiments of the present disclosure. In some embodiments, the exemplary process 800 may be implemented by the computing device 120 in the exemplary environment 100, for example, by a processor or processing unit of the computing device 120, or by various functional modules of the computing device 120. In other embodiments, the exemplary process 800 may also be implemented by a computing device independent of the exemplary environment 100, or may be implemented by other units or modules in the exemplary environment 100. For ease of illustration, the exemplary process 800 will be described with reference to FIG. 1.

At block 810, the computing device 120 may determine whether a number of times that an object in the object set 112 is preferred within a predetermined time period is less than a threshold number of times or not. The predetermined time period is referred to as a second predetermined time period to distinguish from the first predetermined time period described above. In some embodiments, the second predetermined time period may be consistent with the cycle of the full updating of the tree structure 140, for example, both are one day. In other embodiments, the second predetermined time period may also be set to be different from the cycle of the full updating of the tree structure 140. For example, the second predetermined time period may be a multiple of the cycle of the full updating of the tree structure 140.

If the computing device 120 determines that the number of times that each object in the object set 112 is preferred within a predetermined time period is not less than the threshold number of times (not shown in FIG. 8), it means that each object in the object set 112 is still preferred by the user in the near future. In this case, the computing device 120 may keep the object in the object set 112 unchanged when performing the full updating, or if a new object is detected, only add the new object to the object set 112 without removing an original object.

In another aspect, if the computing device 120 determines that a number of times that an object in the object set 112 is preferred within the second predetermined time period is less than the threshold number of times, it means that the object is no longer preferred by the user in the near future, that is, this object is no longer suitable for recommendation to the user. In such a case, the exemplary process 800 may proceed to block 820. At block 820, the computing device 120 may remove the object from the object set 112 to obtain a new object set 112, and then execute block 830.

At block 830, the computing device 120 may obtain a new tree structure parameter 132 of a new tree structure 140 based on the new object set 112. For example, a process of obtaining the new tree structure parameter 132 based on the new object set 112 may be similar to the process of obtaining the tree structure 140 and the tree structure parameter 132 based on the object set 112 described above, which will not be repeated here. At block 840, the computing device 120 may construct a new recalling model 130 based on the new tree structure parameter 132. For example, a process of constructing the new recalling model 130 based on the new tree structure parameter 132 may be similar to the process of constructing the recalling model 130 based on the tree structure parameter 132, which will not be repeated here. Through the exemplary process 800, the computing device 120 can ensure that the tree structure 140 of the recalling model 130 indexes an object that may be of interest to the user, thereby optimizing the recalling result of the recalling model 130. In addition, since a node in the tree structure 140 that is no longer interested or less interested by the user is excluded, the number of nodes in the tree structure 140 can be reduced, so that the computing resource or storage resource used by the computing device 120 to process the tree structure 140 can be saved.

FIG. 9 shows a flowchart of an exemplary process 900 of a method of recommending information according to the embodiments of the present disclosure. It will be understood that the exemplary process 900 illustrates that a recommendation system uses the recalling model 130 described above to determine an object recommended to the user. In some embodiments, the exemplary process 900 may be implemented by the computing device 120 in the exemplary environment 100, for example, by a processor or processing unit of the computing device 120, or by various functional modules of the computing device 120. In other embodiments, the exemplary process 900 may also be implemented by a computing device independent of the exemplary environment 100, or may be implemented by other units or modules in the exemplary environment 100. For ease of illustration, the exemplary process 900 will be described with reference to FIG. 1.

At block 910, the computing device 120 determines a candidate object set 114 for a user from the object set 112 used for recommendation in a recommendation system based on the recalling model 130. It should be noted that in the exemplary process 900, the recalling model 130 used by the computing device 120 is constructed by the method of any embodiment of the present disclosure described herein. Specifically, in some embodiments, the computing device 120 may input a user data (e.g., user behavior data, user profile data, user context data, etc.) associated with a user into the recalling model 130. Based on the input user data, the tree structure parameter 132 and the classifier parameter 134, the recalling model 130 can use the classifier 150 to sequentially predict, from a top layer of the tree structure 140 to a bottom layer of the tree structure 140, a preference node set whose probability of being preferred by a user is ranked higher in each layer, so as to finally determine the candidate object set 114.

At block 920, the computing device 120 determines one or more objects 116 recommended to the user from the candidate object set 114. For example, the computing device 120 may further select an object 116 for recommendation to the user in the candidate object set 114 using any known or future developed selection method (e.g., a ranking method). In the exemplary process 900, since the recalling model 130 constructed according to the embodiments of the present disclosure can realize the optimized training process and use process, and obtain improved recalling result, the recommendation performance of the recommendation system can be improved.

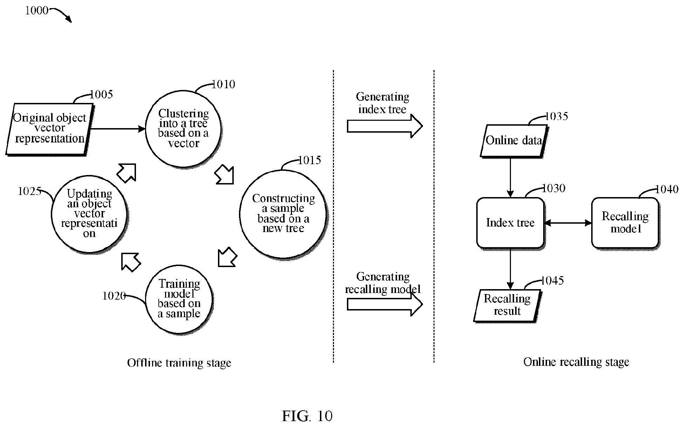

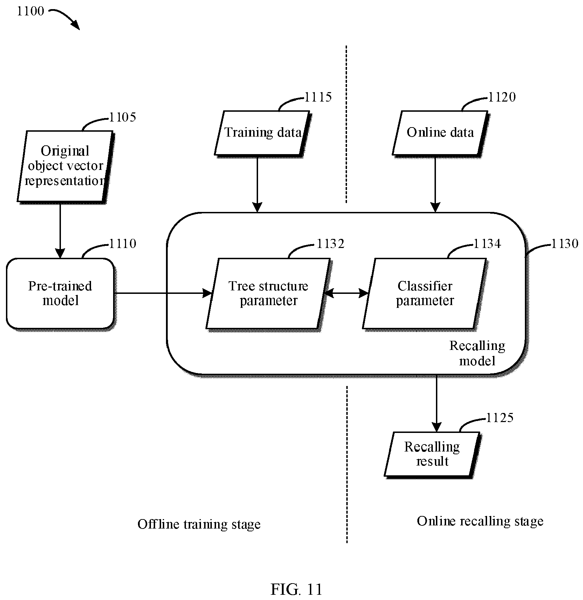

In order to further illustrate the technical advantages and beneficial technical effects of the embodiments of the present disclosure, an exemplary process of an online recalling stage and an offline training stage in a case that the tree structure is separated from the recalling model will be described below with reference to FIG. 10. Then, an exemplary process of the offline training stage and the online recalling stage of the recalling model (which includes the tree structure parameter and the classifier parameter as model parameters) in the embodiments of the present disclosure will be described with reference to FIG. 11. Next, the technical advantages and beneficial technical effects of the recalling model provided by the embodiments of the present disclosure will be discussed in more detail compared with the technical advantages and beneficial technical effects of the case that the tree structure is separated from the recalling model.

FIG. 10 shows a block diagram of an exemplary process 1000 of an online recalling stage and an offline training stage in a case that the tree structure is separated from the recalling model. First, it should be noted that in the technical solution of the exemplary process 1000, an index tree 1030 is not a part of a recalling model 1040. On the contrary, the index tree 1030 and the recalling model 1040 are two independent portions, for example, implemented by different computing devices, exist in different forms, and so on. Therefore, as shown in FIG. 10, in the offline training stage of the exemplary process 1000 of the technical solution, an original object vector representation 1005 can be used to perform a step of "clustering into a tree based on a vector" 1010, that is, clustering into an initial index tree 1030 based on the original object vector representation 1005 of the object.

Next, the initial index tree 1030 may be used to perform a step of "constructing a sample based on a new tree" 1015. That is, in the technical solution of the exemplary process 1000, since the index tree 1030 is independent of the recalling model 1040, the "object and user data" pairing directly acquired from the recommendation system cannot be directly used to train the recalling model 1040. Alternatively, the "object and user data" pairing needs to be processed by the index tree 1030 before determining sample data for training the recalling model 1040 (for example, determining a positive sample and a negative sample based on the index tree 1030). Then, the sample constructed based on the index tree 1030 can be used to perform a step of "training model based on a sample" 1020, that is, training the recalling model 1040 based on the sample data. Thereafter, the trained recalling model 1040 can be used to perform a step of "updating an object vector representation" 1025, that is, the trained recalling model 1040 can be used to update the object vector representation of the object to obtain the updated object vector representation.

Then, the updated object vector representation can be used again to perform a step of "clustering into a tree based on a vector" 1010, that is, the updated object vector representation of the object can be re-clustered to form a new index tree 1030. As shown in FIG. 10, in the offline training stage, the above-mentioned steps 1010, 1015, 1020 and 1025 can be executed cyclically to update and optimize the index tree 1030 and the recalling model 1040 until both the index tree 1030 and the recalling model 1040 obtain predetermined training results. Finally, the index tree 1030 and the recalling model 1040 may be output in the offline training stage of the exemplary process 1000.

As further shown in FIG. 10, in the online recalling stage of the exemplary process 1000, an online data 1035 can predict, layer by layer, the user's preference for a node (or an object) in each layer according to the structure of the index tree 1030. In this process, the index tree 1030 needs to interact with the recalling model 1040 to predict whether the user is interested in a node (or an object) or not. For example, the index tree 1030 may provide the recalling model 1040 with which nodes in a current layer need to be determined whether they are preferred by the user based on the index structure, while the recalling model 1040 needs to provide the index tree 1030 with prediction results of which nodes in the current layer the user prefers. After multiple interactions between the index tree 1030 and the recalling model 1040, the index tree 1030 can determine a node being preferred by the user in the bottom layer, so as to determine the recalling result 1045.

Thus, different from the embodiments of the present disclosure, the technical solution of the exemplary process 1000 has several disadvantages. The first disadvantage is that the index tree 1030, as an additional index data structure, is used to generate the training data required for the model training of the recalling model 1040, but does not directly participate in the network training, which has resulted in various adverse consequences. The first consequence is that the training data needs to be generated in advance based on the index tree 1030, that is, the index tree 1030 needs to be generated in advance to start training the recalling model 1040, which significantly reduces the training speed. The second consequence is that the training data is tightly coupled with the structure of the specified index tree 1030. If the tree structure of the index tree 1030 changes, the original training data becomes meaningless, resulting in the training data cannot be reused and a lot of storage space is occupied. The third consequence is that the update efficiency of the tree structure of index tree 1030 is limited, the tree structure of index tree 1030 cannot participate in the gradient based reverse updating of the network, and a more flexible tree index update strategy cannot be applied.

The second disadvantage is that the tree structure of the index tree 1030 is fixed. The algorithm can only learn the optimal object retrieval strategy based on a given index tree 1030, and cannot solve the recalling scenarios in which objects need to be added and deleted frequently, such as the recalling scenarios of short video and information stream. That is, the index tree 1030 does not support incremental updating and full updating in a streaming manner, which limits its application scenarios and is not suitable for recalling scenarios with a large number of new entries, such as graphic and video recalling scenarios. The third disadvantage is that when constructing the index tree 1030 using the feature configuration on the object side, the pre-trained information provided by the pre-trained model is not used, resulting in the whole training is divided into two processes, that is, constructing the index tree 1030 and training the deep learning model based on the index tree 1030 need to be executed in turn. Due to the random initialization of the index tree 1030, the whole convergence speed of the index tree 1030 and the recalling model 1040 is slow, and a good effect may be achieved only by iterating many times.

FIG. 11 shows a block diagram of an exemplary process 1100 of an offline training stage and an online recalling stage of a recalling model 1130 according to the embodiments of the present disclosure. Different from the case that the index tree 1030 is separated from the recalling model 1040 illustrated in FIG. 10, the recalling model 1130 of the embodiments of the present disclosure shown in FIG. 11 is formed as a whole recalling model 1130 based on the tree structure and the classifier. Therefore, parameters of the recalling model 1130 may include the tree structure parameter 1132 and the classifier parameter 1134. It should be noted that the recalling model 1130, tree structure parameter 1132 and classifier parameter 1134 illustrated in FIG. 11 can be considered as examples of recalling model 130, tree structure parameter 132 and classifier parameter 134 in FIG. 1, respectively.

As shown in FIG. 11, in the offline training stage, an original object vector representation 1105 may first be processed by a pre-trained model 1110 to generate an optimized object vector set optimized in terms of a clustering property (not shown in FIG. 11). Then, the optimized object vector set can be used to obtain an initial tree structure parameter 1132. It should be noted that the original object vector representation 1105 and the pre-trained model 1110 illustrated in FIG. 11 can be considered as examples of the original object vector representation 410 and the pre-trained model 420 in FIG. 4, respectively. In addition, how to use the optimized object vector set to obtain the initial tree structure parameter 1132 can refer to the exemplary process 300 described above with respect to FIG. 3, which will not be repeated here.

In another aspect, depending on the specific machine learning (e.g., deep learning) model adopted by the classifier of the recalling model 1130, the classifier parameter 1134 may be initialized in a manner corresponding to the machine learning model. Next, the initial recalling model 1130 may be constructed based on the initial tree structure parameter 1132 and an initial classifier parameter 1134. Then, a training data 1115 can be used to train the recalling model 1130 to adjust or optimize the model parameters of the recalling model 1130, including the tree structure parameter 1132 and the classifier parameter 1134. In some embodiments, the training data 1115 may include a historical data of the user's preferences and interests for the object and the user's historical user data, for example, in a form of "object and user data" pairing, which can be obtained directly from a historical online data of a recommendation model.

It should be noted that since the recalling model 1130 of the embodiments of the present disclosure is formed as a whole recalling model based on the tree structure and classifier, the training data 1115 can be directly input into the recalling model 1130 to train the recalling model 1130 without first being processed by the tree structure to form the training data for training the recalling model 1130. In other words, the original data in the recommendation system can directly participate in the model training of the recalling model 1130, therefore, a coupling degree between the data and the model is reduced and the related workload is reduced. For example, after being input to the recalling model 1130, the training data 1115 is processed through the exemplary processes 500 and 600 described above with reference to FIGS. 5 and 6 to obtain a positive sample for training the recalling model 1130.

This is in sharp contrast to the case that the index tree 1030 is separated from the recalling model 1040 illustrated in FIG. 10. In the scenario of FIG. 10, since the index tree 1030 and the recalling model 1040 are separated and independent, the historical online data of the recommendation model cannot be directly used to train the recalling model 1040. Instead, the historical online data needs to be processed by the index tree 1030 (for example, determining a positive sample and a negative sample of the training data) before it can be used to train the recalling model 1040. In addition, the index tree 1030 in FIG. 10 cannot participate in the back propagation updating of the machine learning network because it is independent of the recalling model 1040. In contrast, the tree structure and classifier model of the recalling model 1130 of the embodiments of the present disclosure can participate in network training at the same time, so that the effect of the recalling model can be further improved. In other words, the tree structure of recalling model 1130, as a part of recalling model 1130, participates in network training at the same time, which not only improves the recalling effect, but also improves the training speed.

In a specific implementation of a project, there are three key factors in the recalling step of the recommendation system, that is, a time T consumed in a single similarity calculation between the user and the object, a number of calculation times N required to complete the object recalling, and a performance limit Bound of the recommendation system, which usually requires T × N≤Bound. In practice, for each recalling of each user, if an advanced deep learning model is applied, the time T consumed will increase. Further, if information retrieval for all objects is performed, the number of calculation times N will increase. Multiplying the two may reach the performance limit Bound of the recommendation system, which is unacceptable from the perspective of engineering. Based on these considerations, the training of the recalling model 1130 of the embodiments of the present disclosure can be realized in engineering according to the following operations.

First, the original object vector representation 1105 can be processed by the pre-trained model 1110 to obtain an initial optimized object vector set, and the initial optimized object vector set can be clustered to obtain an initial tree structure. In addition, a frequency of full updating the tree structure can be set, such as once a day. Then, the classifier model parameter and the tree structure parameter can be updated iteratively through an offline data. The specific steps can include the following steps. Step a): for the training data of each minibatch, the training data of each layer of the tree structure is sampled within the recalling model 1130 to train a parameter of a classifier unit of each layer of the classifier. Step b): obtaining a new object set in the training data that is not in the tree structure, and updating the new object set incrementally to the tree structure. Step c): if a training round meets a trigger condition for full tree constructing (for example, the training round reaches 24 times in one day), parameters of all leaf nodes of the tree structure (including an exit mechanism of an object, which can only save a popular object or leaf node) will be saved, the clustering tree constructing method for the optimized object vector set will be reused, and regenerating the updated tree structure. Step d): executing step a).

After training the recalling model 1130, entering the online recalling stage. Specifically, the online data 1120 of the recommendation system can be directly input into the trained recalling model 1130 to calculate the recalling result 1125. For example, the online data 1120 may be user data of a user, such as user behavior data, user profile data, user context data, and so on. In some embodiments, based on the online data 1120, the tree structure represented by the tree structure parameter 1132 and the classifier represented by the classifier parameter 1134, the recalling model 1130 can determine, layer by layer, a node preferred by a user in each layer from the top layer of the tree structure, and finally determine a plurality of leaf nodes (i.e., preferred objects) preferred by the user in the bottom layer of the tree structure, so as to determine the recalling result 1125. It should be noted that the recalling result 1125 illustrated in FIG. 11 can be considered as an example of the candidate object set 114 in FIG. 1. It can be seen that in the technical solution of the exemplary process 1000, the index tree 1030 and the recalling model 1040 are still two independent portions, and the index tree 1030 needs to exist as an additional data structure. In contrast, the tree structure of the embodiments of the present disclosure is included in the recalling model 1130. Therefore, it is only necessary to deploy the recalling model 1130, which not only has less workload, but also has faster object retrieval speed.

It can be seen that the embodiments of the present disclosure proposes a recalling model and a method of constructing the recalling model, which can realize the joint training of the tree structure for indexing objects and the classifier for predicting user preferences, and can be applied to the recommendation system. In some designs of the present disclosure, first, the classifier model and the object retrieval tree structure can be trained integrally. Specifically, based on a classifier model parameter and an object retrieval tree structure of a previous round of training, a next round of training data can be constructed to update the deep learning network, so as to achieve the consistency of a target of the classifier model training and a target of the object retrieval tree structure, so as to improve the recalling effect of recalling model 1130. In addition, in some embodiments, the tree structure of the recalling model 1130 can support the incremental updating and the full updating, so that the application scenario of the recalling model 1130 is extended. Furthermore, in some embodiments, the recalling model 1130 realizes the efficient initialization of the object retrieval tree structure based on the pre-trained information provided by the pre-trained model, causes the construction of the retrieval tree to be more reasonable, speeds up the convergence speed, and improves the recalling effect of the recalling model 1130.

Furthermore, in some embodiments, the recalling model 1130 can also improve the positive sample sampling manner in each layer of the tree structure. For example, instead of taking each node on a path from an object preferred by a user to a root node as a positive sample of a layer to participate in the training of the layer classifier, the recalling model 1130 can add another beam search operation on this basis, so as to filter out a positive sample in a layer candidate set not in the beam search in an upward backtracking path in the tree structure, so as to unify the target of model training and the target of object retrieval to further improve the recalling accuracy. Therefore, the construction manner of training data in each layer of tree structure is more reasonable, consistent with the target of object retrieval optimization, and improves the overall effect of recalling model 1130. Furthermore, in some embodiments, the recalling model 1130 may also support streaming training. For example, the recalling model 1130 may take the frequency of incremental updating and full updating of the tree structure as a hyper-parameter of the model. The streaming training of recalling model 1130 and the design of dynamic adjustment tree structure can greatly expand the application scenario of the recalling model 1130. In terms of engineering quantity, since the sampling logic of training samples already includes object retrieval logic, the workload of constructing online object retrieval logic can be removed, so that online recalling and offline training can use a same recalling model 1130, so that the workload required to deploy the recommendation system is reduced.

In addition, in the technical field of recommendation system, there is a conventional solution of recalling retrieval method based on vector similarity (also known as double tower structure and deep structured semantic model DSSM). A core idea of this solution is to map a user side vector and an object side vector into a common dimension semantic space, and train the implicit semantic model by maximizing a cosine similarity between the user vector and the object vector, so as to achieve the purpose of object retrieval. However, the conventional solution has the following disadvantages. Firstly, no matter how a front-end network changes, the user vector and object vector need to be mapped into a same space to calculate the cosine similarity, which limits the design of the model. Secondly, in order to meet the needs of online real-time object retrieval, the object side vector needs to be calculated in advance, and a data structure that can be retrieved quickly is constructed. The main target of constructing retrieval structure is retrieval performance. The usual method is to cluster object vectors. Firstly, the user vector compares the similarity with the vector mean of each category, and then calculates the similarity with each object in the most similar category, so as to reduce the amount of calculation brought by the full database retrieval of objects. However, the optimization targets of index construction stage and model training stage of retrieval structure are inconsistent, which affects the recalling effect.

Therefore, compared with the conventional recalling retrieval method based on vector similarity, the recalling model 1130 of the embodiments of the present disclosure has achieved technical advantages and beneficial technical effects in the following aspects. Firstly, the conventional double tower structure can use cosine similarity in the last step to map the user side vector and the object side vector into a same dimension for measurement. In contrast, the recalling model 1130 of the embodiments of the present disclosure can carry any advanced deep learning model in the recalling step, and can support the user side and the object side to interact with a complex model to obtain the recalling result. Secondly, after obtaining the recalling model, the conventional double tower structure also needs to calculate the object side vector in advance to construct the retrieval structure, so that the online recalling part needs additional workload. In contrast, the offline training of the recalling model 1130 of the embodiments of the present disclosure uses a same set of models as that of the online recalling, and there is no need to construct the retrieval structure. Third, the construction target of the conventional double tower retrieval structure is to reduce a number of online calculations, which is inconsistent with the optimal target of offline training, which will affect the final recalling effect. In contrast, the retrieval tree structure of the recalling model 1130 of the embodiments of the present disclosure is implicitly trained together with the classifier model to obtain a globally optimal recalling model 1130.

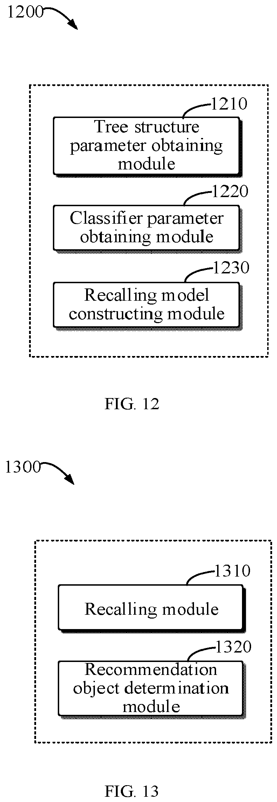

FIG. 12 shows a block diagram of an exemplary apparatus 1200 of processing information according to the embodiments of the present disclosure. In some embodiments, the apparatus 1200 may be included in or implemented as the computing device 120 of FIG. 1. In other embodiments, the device 1200 may be included in or implemented as a computing device not shown in FIG. 1.

As shown in FIG. 12, the apparatus 1200 includes a tree structure parameter obtaining module 1210, a classifier parameter obtaining module 1220, and a recalling model constructing module 1230. The tree structure parameter obtaining module 1210 is used to obtain a tree structure parameter of the tree structure, in which the tree structure is used to index an object set used for recommendation. The classifier parameter obtaining module 1220 is used to obtain a classifier parameter of a classifier, in which the classifier is used to sequentially predict, from a top layer of the tree structure to a bottom layer of the tree structure, a preference node set whose probability of being preferred by a user is ranked higher in each layer, and a preference node set of each layer subsequent to the top layer of the tree structure is determined based on a preference node set of a previous layer of the each layer. The recalling model constructing module 1230 is used to construct a recalling model based on the tree structure parameter and the classifier parameter to determine a candidate object set for the user in the object set.

In some embodiments, the tree structure parameter obtaining module 1210 includes: an original object vector set generation module used to vectorize the object set to generate an original object vector set; an optimization object vector set generation module used to generate an optimized object vector set optimized in terms of a clustering property based on a pre-trained model and the original object vector set; and a clustering module used to cluster the optimized object vector set to construct the tree structure to determine the tree structure parameter.

In some embodiments, the user described above is a first user, and the apparatus 1200 further includes: a preference leaf node determination module used to determine, in the tree structure, a leaf node preferred by a second user based on a historical user data for the second user; a first node set determination module used to determine ancestor nodes of the leaf node in the tree structure as a first node set; and a positive sample determination module used to determine a positive sample for training the recalling model based on the first node set.

In some embodiments, the positive sample determination module includes: a layer node subset determination module used to determine a plurality of layer node subsets corresponding to a plurality of layers subsequent to the top layer of the tree structure based on the historical user data and the classifier, in which each of the plurality of layer node subsets includes a plurality of nodes whose probabilities are ranked higher in a corresponding layer; a second node set determination module used to determine a second node set based on a union of the plurality of layer node subsets; and a positive sample obtaining module used to obtain the positive sample based on an intersection of the first node set and the second node set.

In some embodiments, the apparatus 1200 further includes: a new leaf node creation module used to create a new leaf node corresponding to a new object in response to determining that a training data used to train the recalling model contains the new object that does not belong to the object set; and an insertion module used to insert the new leaf node into the tree structure.

In some embodiments, the insertion module includes: a user data obtaining module used to obtain, in the training data, a user data associated with the new object; a target leaf node determination module used to determine, in the tree structure, a target leaf node whose probability of being preferred is the largest based on the user data and the classifier; and a sibling node addition module used to add the new leaf node to the tree structure as a sibling node of the target leaf node.

In some embodiments, the user data obtaining module includes a user data determination module used to: in response to determining that the new object is associated with a plurality of candidate user data for a plurality of users, determine the user data based on at least one of: one candidate user data randomly selected from the plurality of candidate user data, an average candidate user data determined based on the plurality of candidate user data, or a candidate user data corresponding to a user with the largest weight among the plurality of candidate user data.

In some embodiments, the insertion module includes: a target non-leaf node determination module used to randomly determine a target non-leaf node among non-leaf nodes in a sub-bottom layer of the tree structure; and a child node addition module used to add the new leaf node to the tree structure as a child node of the target non-leaf node.

In some embodiments, the apparatus 1200 further includes a new object determination module used to determine that the new object is contained in the training data in response to determining that a number of users who prefer the new object within a first predetermined time period is greater than a threshold number.

In some embodiments, the apparatus 1200 further includes: a new object set obtaining module used to: in response to determining that a number of times that an object in the object set is preferred within a second predetermined time period is less than a threshold number of times, remove said object from the object set to obtain a new object set; a new tree structure parameter obtaining module used to obtain a new tree structure parameter of a new tree structure based on the new object set; and a new recalling model constructing module used to construct a new recalling model based on the new tree structure parameter.

In some embodiments, the classifier includes a plurality of classifier units corresponding to a plurality of layers subsequent to the top layer of the tree structure, and each of the plurality of classifier units is used to predict, in a corresponding layer, a probability of a node being preferred by the user.

FIG. 13 shows a block diagram of an exemplary apparatus 1300 of recommending information according to the embodiments of the present disclosure. In some embodiments, the apparatus 1300 may be included in or implemented as the computing device 120 of FIG. 1. In other embodiments, the apparatus 1300 may be included in or implemented as a computing device not shown in FIG. 1.

As shown in FIG. 13, the apparatus 1300 includes a recalling module 1310 and a recommendation object determination module 1320. The recalling module 1310 is used to determine a candidate object set for a user from an object set used for recommendation in a recommendation system based on a recalling model, in which the recalling model is constructed according to any embodiment of the present disclosure. The recommendation object determination module 1320 is used to determine, in the candidate object set, at least one object recommended to the user.

According to the embodiments of the present disclosure, the present disclosure further provides an electronic device, a readable storage medium and a computer program product.

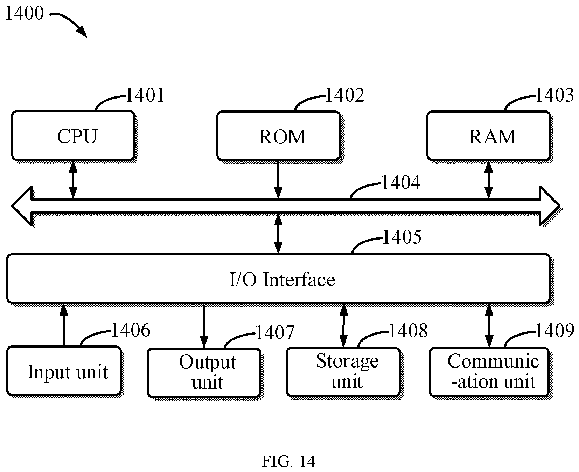

FIG. 14 shows a schematic block diagram of an exemplary electronic device 1400 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smart phone, a wearable device, and other similar computing apparatuses. The components, connections and relationships between the components, and functions of the components in the present disclosure are merely examples, and are not intended to limit the implementation of the present disclosure described and/or required herein.

As shown in FIG. 14, the electronic device 1400 includes a computing unit 1401, which may perform various appropriate actions and processing based on a computer program stored in a read-only memory (ROM) 1402 or a computer program loaded from a storage unit 1008 into a random access memory (RAM) 1403. Various programs and data required for the operation of the electronic device 1400 may be stored in the RAM 1403. The computing unit 1401, the ROM 1402 and the RAM 1403 are connected to each other through a bus 1404. An input/output (I/O) interface 1405 is also connected to the bus 1404.

Various components in the electronic device 1400, including an input unit 1406 such as a keyboard, a mouse, etc., an output unit 1407 such as various types of displays, speakers, etc., a storage unit 1408 such as a magnetic disk, an optical disk, etc., and a communication unit 1409 such as a network card, a modem, a wireless communication transceiver, etc., are connected to the I/O interface 1405. The communication unit 1409 allows the electronic device 1400 to exchange information/data with other devices through a computer network such as the Internet and/or various telecommunication networks.

The computing unit 1401 may be various general-purpose and/or special-purpose processing components with processing and computing capabilities. Some examples of the computing unit 1401 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1401 executes the various methods and processes described above, such as the methods 200, 300, 500, 600, 700, 800 and 900. For example, in some embodiments, the methods 200, 300, 500, 600, 700, 800 and 900 may be implemented as a computer software program, which is tangibly contained in a machine-readable medium, such as the storage unit 1408. In some embodiments, a part or all of the computer programs may be loaded into and/or installed on the electronic device 1400 via the ROM 1402 and/or the communication unit 1409. When the computer program is loaded into the RAM 1403 and executed by the computing unit 1401, one or more steps of the methods 200, 300, 500, 600, 700, 800 and 900 described above may be executed. Alternatively, in other embodiments, the computing unit 1401 may be configured to perform the methods 200, 300, 500, 600, 700, 800 and 900 in any other suitable manner (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard parts (ASSP), a system on chip (SOC), a complex programming logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input apparatus and the at least one output apparatus, and may transmit the data and instructions to the storage system, the at least one input apparatus, and the at least one output apparatus.

Program codes used to implement the method of the present disclosure may be written in any combination of one or more programming languages. These program codes may be provided to a processor or a controller of a general-purpose computer, a dedicated computer or other programmable data processing devices, so that when the program codes are executed by the processor or the controller, functions/operations specified in the flowchart and/or the block diagram may be implemented. The program codes may be executed entirely or partly on the machine, or executed partly on the machine and partly executed on a remote machine as an independent software package, or executed entirely on the remote machine or a server.

In the context of the present disclosure, the machine-readable medium may be a tangible medium, which may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include one or more wire-based electrical connection, portable computer disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination thereof.

In order to provide interaction with the user, the systems and technologies described here may be implemented on a computer including a display apparatus (for example, a CRT (cathode ray tube) or LCD (liquid crystal display) monitor) for displaying information to the user, and a keyboard and a pointing device (for example, a mouse or a trackball) through which the user may provide the input to the computer. Other types of apparatus may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the systems and technologies described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN) and internet.

The computer system may include a client and a server. The client and the server are generally far away from each other and usually interact through a communication network. The relationship between the client and the server is generated through computer programs running on the corresponding computers and having a client-server relationship with each other. The server can be a cloud server, also known as a cloud computing server or a cloud host, which is a host product in a cloud computing service system to solve shortcomings of difficult management and weak business scalability in a conventional physical host and VPS service ("Virtual Private Server", or "VPS" for short). The server can also be a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of processing information, comprising:
obtaining (210) a tree structure parameter of a tree structure, wherein the tree structure is configured to index an object set used for recommendation;
obtaining (220) a classifier parameter of a classifier, wherein the classifier is configured to sequentially predict, from a top layer of the tree structure to a bottom layer of the tree structure, a preference node set whose probability of being preferred by a user is ranked higher in each layer, and a preference node set of each layer subsequent to the top layer of the tree structure is determined based on a preference node set of a previous layer of the each layer; and
constructing (230) a recalling model based on the tree structure parameter and the classifier parameter to determine a candidate object set for the user in the object set.

2. The method according to claim 1, wherein the obtaining the tree structure parameter comprises:
vectorizing (310) the object set to generate an original object vector set;
generating (320) an optimized object vector set optimized in terms of a clustering property, based on a pre-trained model and the original object vector set; and
clustering (330) the optimized object vector set to construct the tree structure, so as to determine the tree structure parameter.

3. The method according to claim 1, wherein the user is a first user, and the method further comprises:
determining (510), in the tree structure, a leaf node preferred by a second user based on a historical user data for the second user;
determining (520) ancestor nodes of the leaf node in the tree structure as a first node set; and
determining (530) a positive sample for training the recalling model based on the first node set.

4. The method according to claim 3, wherein the determining the positive sample comprises:
determining (610) a plurality of layer node subsets corresponding to a plurality of layers subsequent to the top layer of the tree structure based on the historical user data and the classifier, wherein each of the plurality of layer node subsets comprises a plurality of nodes whose probabilities are ranked higher in a corresponding layer;
determining (620) a second node set based on a union of the plurality of layer node subsets; and
obtaining (630) the positive sample based on an intersection of the first node set and the second node set.

5. The method according to claim 1, further comprising:
in response to determining that a training data used to train the recalling model contains a new object that does not belong to the object set, creating a new leaf node corresponding to the new object; and
inserting the new leaf node into the tree structure.

6. The method according to claim 5, wherein the inserting the new leaf node into the tree structure comprises:
obtaining (710), in the training data, a user data associated with the new object;
determining (720), in the tree structure, a target leaf node whose probability of being preferred is the largest, based on the user data and the classifier; and
adding (730) the new leaf node to the tree structure as a sibling node of the target leaf node.

7. The method according to claim 6, wherein the obtaining a user data associated with the new object comprises:
in response to determining that the new object is associated with a plurality of candidate user data for a plurality of users, determining the user data based on at least one of:
one candidate user data randomly selected from the plurality of candidate user data, an average candidate user data determined based on the plurality of candidate user data, or
a candidate user data corresponding to a user with the largest weight among the plurality of candidate user data.

8. The method according to claim 5, wherein the inserting the new leaf node into the tree structure comprises:
randomly determining a target non-leaf node among non-leaf nodes in a sub-bottom layer of the tree structure; and
adding the new leaf node to the tree structure as a child node of the target non-leaf node.

9. The method according to claim 5, further comprising:
in response to determining that a number of users who prefer the new object within a first predetermined time period is greater than a threshold number, determining that the new object is contained in the training data.

10. The method according to claim 1, further comprising:
in response to determining that a number of times that an object in the object set is preferred within a second predetermined time period is less than a threshold number of times, removing said object from the object set to obtain a new object set;
obtaining a new tree structure parameter of a new tree structure based on the new object set; and
constructing a new recalling model based on the new tree structure parameter.

11. The method according to claim 1, wherein the classifier comprises a plurality of classifier units corresponding to a plurality of layers subsequent to the top layer of the tree structure, and each of the plurality of classifier units is configured to predict, in a corresponding layer, a probability of a node being preferred by the user.

12. A method of recommending information, comprising:
determining (910) a candidate object set for a user from an object set used for recommendation in a recommendation system based on a recalling model, wherein the recalling model is constructed according to the method of any one of preceding claims; and
determining (920), in the candidate object set, at least one object recommended to the user.

13. An electronic device (1400), comprising:
one or more processor (1401); and
a memory (1402, 1403) communicatively connected to the processor, wherein the memory stores instructions executable by the processor, and the instructions, when executed by the processor, cause the processor to implement the method according to any one of preceding claims.

14. A non-transitory computer-readable storage medium having a computer instruction stored thereon, wherein the computer instruction is configured to cause a computer to implement the method according to any one of preceding claims.

15. A computer program product containing a computer program, wherein the computer program, when executed by a processor, causes the processor to implement the method according to any one of preceding claims.
